**Europäisches Patentamt**

**European Patent Office**

**Office européen des brevets**

(19)

(11) **EP 1 718 022 A2**

## (12) EUROPEAN PATENT APPLICATION

(43) Date of publication:
**02.11.2006 Bulletin 2006/44**

(51) Int Cl.:
***H04L 27/26*** *(2006.01)*

(21) Application number: **06008837.4**

(22) Date of filing: **27.04.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **27.04.2005 KR 20050035296**<br><br>(71) Applicants:<br>• **Samsung Electronics Co., Ltd.**<br>  **Suwon-si, Gyeonggi-Do (KR)**<br>• **Chung-Ang University Industry Academic**<br>  **Cooperation Foundation**<br>  **Seoul (KR)**<br><br>(72) Inventors:<br>• **Kim, Jong-Han,**<br>  **Samsung Elec. Co., Ltd.**<br>  **Suwon-si,**<br>  **Gyeonggi-do (KR)** | • **Lee, Kyu-In,**<br>  **Elec. Eng. Dpt. Chungang University**<br>  **Dongjak-gu,**<br>  **Seoul (KR)**<br>• **Cho, Yong-Soo,**<br>  **Elec. Eng. Dpt. Chungang University**<br>  **Dongjak-gu,**<br>  **Seoul (KR)**<br>• **Lee, Jae-Kon,**<br>  **Samsung Electronics Co., Ltd.**<br>  **Suwon-si,**<br>  **Gyeonggi-do (KR)**<br>• **Song, Hwan-SeokSamsung Electronics Co., Ltd.**<br>  **Suwon-si,**<br>  **Gyeonggi-do (KR)**<br><br>(74) Representative: **Grünecker, Kinkeldey,**<br>  **Stockmair & Schwanhäusser**<br>  **Anwaltssozietät**<br>  **Maximilianstrasse 58**<br>  **80538 München (DE)** |

(54) **Carrier frequency synchronization in a multicarrier receiver**

(57)    Provided is a synchronization apparatus and method for a receiver that performs synchronization in the digital domain and detects a transmission signal. The synchronization apparatus includes an Analogue-to-Digital (A/D) converter for converting a received signal into a digital signal, a frequency synchronizer for synchronizing a frequency using the digital signal output from the A/D converter, a signal detection unit for detecting transmission symbols from a signal synchronized by the frequency synchronizer, and a residual phase error detector for compensating for a residual phase error of the transmission symbol output from the signal detection unit and outputting the resulting transmission symbol. The frequency synchronizer is capable of the CORDIC algorithm.

FIG.1

EP 1 718 022 A2

**Description**

**BACKGROUND OF THE INVENTION**

1. Field of the Invention

The present invention generally relates to an Orthogonal Frequency Division Multiplexing (OFDM)-based communication system, and in particular, to a frequency synchronization apparatus and method using an improved Coordinated Rotation Digital Computer (CORDIC) algorithm for an OFDM system.

2. Description of the Related Art

OFDM is a technique for multicarrier transmission in which a signal is transmitted using multiple carriers. By using a plurality of subcarriers that are orthogonal to each other, OFDM can use a frequency effectively and implement high-speed modulation/demodulation through Inverse Fast Fourier Transform/Fast Fourier Transform. OFDM can extend a symbol period for each subcarrier by the number of subcarriers while maintaining data transmission speed in the transmission of high-speed data having a short symbol period in a wireless communication channel having a multipath fading phenomenon. In this regard, OFDM is more robust to a frequency-selective fading channel than a single-carrier transmission scheme.

OFDM transmission is performed in a symbol unit. When an OFDM symbol is transmitted through a multipath channel, the currently transmitted symbol may be affected by a previously transmitted symbol, which is called Inter Symbol Interference (ISI). To mitigate ISI, a guard interval longer than the maximum delay spread of a channel is inserted between successive OFDM symbols. Thus, a symbol period is a sum of an effective symbol interval in which actual data is transmitted and a guard interval. A receiver detects and demodulates data associated with the effective symbol interval after removing the guard interval. To prevent orthogonality from being destroyed due to the delay of a subcarrier, a signal of the last part of the effective symbol interval is copied and inserted, and the copied and inserted signal is referred to as a cyclic prefix (CP).

Generally, a signal received through a channel has a frequency offset due to phase jitter or Doppler shift. This subcarrier frequency offset causes interference between subcarriers and thus distorts power and phase of the signal. In other words, if subcarrier frequencies of a transmitter and a receiver are different from each other, the subcarrier frequency offset occurs and causes interference between subcarriers, thus destroying orthogonality of a channel and increasing an error rate. Therefore, the receiver should complete frequency synchronization between the transmitter and the receiver before performing a Fourier transform.

A wireless modem using OFDM transmits a training symbol used for channel estimation and initial synchronization at the beginning of a data symbol period. For example, a burst modem for a wireless Local Area Network (LAN) such as an IEEE 802.11a or ETSI HIPERLAN/2 system uses in a time domain a short training symbol composed of 10 repeated sequences, each of which is 16 samples long, and a long training symbol composed of 2 repeated sequences, each of which is 64 samples long.

A conventional carrier frequency synchronization apparatus estimates a frequency offset in a digital domain using a training symbol and then controls a Voltage Controlled Oscillator (VCO) using an output signal of a loop filter according to the estimated frequency offset. The VCO is widely used for subcarrier synchronization in an analog domain, and a Numerical Controlled Oscillator (NCO) for compensating for a subcarrier offset in the digital domain may be used.

However, a subcarrier synchronization method in the analog domain, which is applied to a conventional OFDM system, cannot provide reliable frequency offset compensation for data detection and accurate subcarrier synchronization due to the time delay caused by generation of a VCO control signal using an estimated frequency offset and subcarrier synchronization using an output of the VCO.

A subcarrier synchronization method in a complete digital domain uses a Coordinated Rotation Digital Computer (CORDIC) algorithm or a lookup table to implement an arctangent function or a log function. The subcarrier synchronization method using the CORDIC algorithm can be implemented with a simple structure, but has low computation speed and accuracy. The subcarrier synchronization method using the lookup table has high computation speed and accuracy, but requires frequency memory use and thus is not easy to implement, and requires difficult table address generation.

**SUMMARY OF THE INVENTION**

It is, therefore, an object of the present invention to provide a frequency synchronization apparatus and method using an improved CORDIC algorithm, which provides high computation speed and improves estimation accuracy.

It is another object of the present invention to provide a frequency synchronization apparatus and method capable of accurately and efficiently compensating for a frequency offset by minimizing the time delay caused by subcarrier synchronization using an improved CORDIC algorithm.

According to one aspect of the present invention, there is provided a synchronization apparatus for a receiver that performs synchronization in a digital domain and detects a transmission signal. The synchronization apparatus includes an Analog-to-Digital (A/D) converter for converting a received signal into a digital signal, a frequency synchronizer for synchronizing a frequency using the digital signal output from the A/D converter, a signal detection unit for detecting a transmission symbol from a signal synchronized by the frequency synchronizer, and a residual phase detector for compensating for a residual phase of the transmission symbol output from the signal detection unit and outputting the resulting transmission symbol.

Preferably, the frequency synchronizer includes an estimation unit for estimating a frequency offset of the received signal and a compensation unit for compensating for the frequency offset estimated by the estimation unit.

Preferably, the estimation unit includes a shift register for delaying a sample of the received signal and simultaneously outputting conjugate complex numbers of a predetermined received signal and a next received signal, a first complex multiplier for performing complex multiplying with respect to the output conjugate complex numbers, a first accumulator for accumulating an output of the first complex multiplier, a first preprocessor for performing preprocessing for phase rotation transform with respect to an output of the first accumulator, a vector-mode Coordinated Rotation Digital Computer (CORDIC) calculator for outputting a phase value by vector-mode CORDIC calculation with respect to an output of the first preprocessor, and a first phase adjustor for estimating the frequency offset from the phase value output from the vector-mode CORDIC calculator.

Preferably, the compensation unit includes a bit extender for dividing the frequency offset output from the estimation unit into samples of a predetermined size, a second accumulator for accumulating a frequency offset of each of the samples output from the bit extender to generate a log function table address, a log function processor for outputting a trigonometric function value by referring to the log function table address generated by the second accumulator, a second phase adjustor for generating a complex number using the trigonometric function value output from the log function processor and an output of the second accumulator, and a second complex multiplier for compensating for the signal offset by multiplying the digital signal output from the A/D converter by the complex number output from the second phase adjustor.

Preferably, the residual phase detector includes a pilot extractor for extracting a pilot signal from a baseband signal output from the signal detection unit, a third accumulator for accumulating the extracted pilot signal, a second preprocessor for performing preprocessing for CORDIC calculation with respect to a signal output from the third accumulator, a compact CORDIC calculator for simultaneously performing a vector-mode CORDIC calculation and rotation-mode CORDIC calculation with respect to a signal output from the second preprocessor and outputting the phase value, a third phase adjustor for estimating the frequency offset from the phase value output from the compact CORDIC calculator, and a third complex multiplier for compensating for the residual phase by multiplying the baseband signal output from the signal detection unit by the complex value output from the third phase adjustor.

Preferably, the compact CORDIC calculator includes a vector-mode unit for performing vector-mode CORDIC calculation with respect to the signal output from the second preprocessor, a rotation-mode unit for performing rotation-mode CORDIC calculation using a predetermined initial value, and a counter for counting the number of repetitions of CORDIC calculation.

Preferably, the vector-mode unit includes a first register for receiving and temporarily storing a real part of the signal output from the second preprocessor, a second register for receiving and temporarily storing an imaginary part of the signal output from the second preprocessor, a first shifter for shifting an output of the second register according to the number of repetitions output from the counter, a first complementary operator for performing a complementary operation with respect to 1 for the output of the first shifter, a first multiplexer for multiplexing an output of the first complementary operator and an output of the first shifter, a first Carry Lookahead Adder (CLA) for adding an output of the first multiplexer to the output of the first register and feeding back the result to the first register, a second shifter for shifting the output of the first register according to the number of repetitions output from the counter, a second complementary operator for performing a complementary operation with respect to 1 for the output of the second shifter, a second multiplexer for multiplexing an output of the second complementary operator and the output of the second shifter, and a second CLA for adding an output of the second multiplexer to the output of the second register and feeding back the result to the second register.

Preferably, the rotation-mode unit includes a third register for receiving and temporarily storing a real part of a signal output from the fourth preprocessor, a fourth register for receiving and temporarily storing an imaginary part of the signal output from the fourth preprocessor, a third shifter for shifting an output of the fourth register according to the number of repetitions output from the counter, a third complementary operator for performing a complementary operation with respect to 1 for an output of the third shifter, a third multiplexer for multiplexing an output of the third complementary operator and the output of the third shifter, a third CLA for adding an output of the third multiplexer to the output of the third register and feeding back the result to the third register, a fourth shifter for shifting the output of the third register according to the number of repetitions output from the counter, a fourth complementary operator for performing a complementary operation with respect to 1 for the output of the fourth shifter, a fourth multiplexer for multiplexing an output of the fourth complementary operator and the output of the fourth shifter, and a fourth CLA for adding an output of the fourth multiplexer to the output of the fourth register and feeding back the result to the fourth register.

Preferably, the signal detection unit includes a Fourier transformer for performing Fast Fourier Transform (FFT) with respect to a signal output from the frequency synchronizer, an equalizer for equalizing a signal output from the Fourier transformer, and a channel estimator for estimating a channel value from a signal output from the equalizer and inputting the estimated channel to the Fourier transformer.

According to another aspect of the present invention, there is provided a synchronization method for a receiver that performs synchronization in a digital domain and detects a transmission signal. The synchronization method includes converting a received signal into a digital signal, synchronizing a frequency using the digital signal, detecting a transmission symbol from the synchronized signal, and compensating for a residual phase of the output transmission symbol and outputting the resulting transmission symbol.

Preferably, the step of synchronizing the frequency includes estimating a frequency offset of the received signal and compensating for the estimated frequency offset.

Preferably, the step of estimating the frequency offset includes delaying a sample of the received signal and simultaneously outputting conjugate complex numbers of a predetermined received signal and a next received signal, performing complex multiplying with respect to the output conjugate complex numbers, accumulating the result of complex multiplying, performing preprocessing for phase rotation transform with respect to the accumulated result of complex multiplying, outputting a phase value by vector-mode CORDIC calculation with respect to the result of preprocessing, and estimating the frequency offset from the output phase value.

Preferably, the step of compensating for the frequency offset includes dividing the estimated frequency offset into samples of a predetermined size, accumulating a frequency offset of each of the samples output to generate a log function table address, outputting a trigonometric function value by referring to the generated log function table address, generating a complex number using the output trigonometric function value and the generated log function table address, and compensating for the signal offset by multiplying the output digital signal by the generated complex number.

Preferably, the step of preprocessing for phase rotation transform includes performing Exclusive OR (XOR) operations on the accumulated result of complex multiplying, performing OR operations on the result of XOR operations, and multiplexing the result of OR operations and outputting the result of preprocessing.

Preferably, the step of compensating for the residual phase of the transmission symbol includes extracting a pilot signal from the transmission symbol, accumulating the extracted pilot signal, performing preprocessing for CORDIC calculation with respect to the accumulated pilot signal, simultaneously performing vector-mode CORDIC calculation and rotation-mode CORDIC calculation with respect to the preprocessed signal and outputting the phase value, estimating the frequency offset from the output phase value, and compensating for the residual phase by multiplying the transmission symbol by the complex number corresponding to the estimated frequency offset.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram illustrating the internal structure of an OFDM receiver using a frequency synchronizer according to the present invention;
FIG. 2 is a block diagram illustrating the internal structure of the frequency synchronizer of FIG. 1 according to the present invention;
FIG. 3 illustrates the internal structure of a first preprocessor of FIG. 2;
FIG. 4 is a conceptual view of an operation of the first preprocessor of FIG. 2;
FIG. 5 is a block diagram illustrating the internal structure of a residual phase detector of FIG. 1; and
FIG 6 is a block diagram illustrating the internal structure of a compact CORDIC calculator of FIG. 5.

## DETAILED DESCRIPTION OF THE PREFERRED EMBODIMENT

A preferred embodiment of the present invention will now be described in detail with reference to the annexed drawings. In the following description, a detailed description of known functions and configurations incorporated herein has been omitted for conciseness.

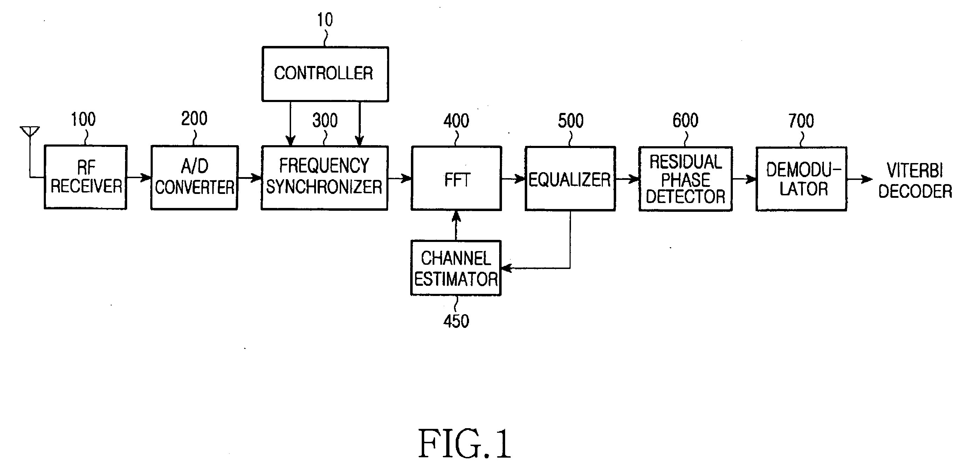

FIG. 1 is a block diagram of an OFDM receiver using a frequency synchronizer according to the present invention.

Referring to FIG. 1, the OFDM receiver includes a Radio Frequency (RF) receiver 100 for processing an RF signal received through an antenna, an analog-to-digital (A/D) converter 200 for converting an analog signal output from the RF receiver 100 into a digital signal, a frequency synchronizer 300 for synchronizing a frequency offset of the digital signal output from the A/D converter 200, a Fourier transformer 400 for performing Fast Fourier Transform (FFT) with respect to a signal output from the frequency synchronizer 300, an equalizer 500 for equalizing a signal output from the Fourier transformer 400, a residual phase detector 600 for extracting a pilot signal from a signal output from the equalizer 500, detecting a residual phase, and compensating for a data symbol with the detected residual phase, and a demodulator 700 for demodulating a signal output from the residual phase detector 600 and outputting the demodulated signal to a viterbi decoder (not shown). The frequency synchronizer 300 estimates an integer or decimal frequency offset of a received signal according to a control signal output from a controller 10 and compensates for the received signal with the estimated frequency offset. The equalizer 500 performs equalization using channel information that is estimated by a channel estimator 450 from a signal output from the Fourier transformer 400.

When both a short training symbol and a long training symbol are used, the frequency synchronizer 300 compensates for a frequency offset of the long training symbol by estimating a frequency offset of the short training symbol (coarse mode) and compensates for the frequency offset of the long training symbol again by re-estimating the compensated frequency offset of the long training symbol (fme mode). A data symbol is compensated for with a sum of the frequency offset of the short training symbol and the frequency offset of the long training symbol. When only one of the short training symbol and the long training symbol is used, the frequency synchronizer 300 estimates a frequency offset of the short training symbol or the long training symbol for compensation.

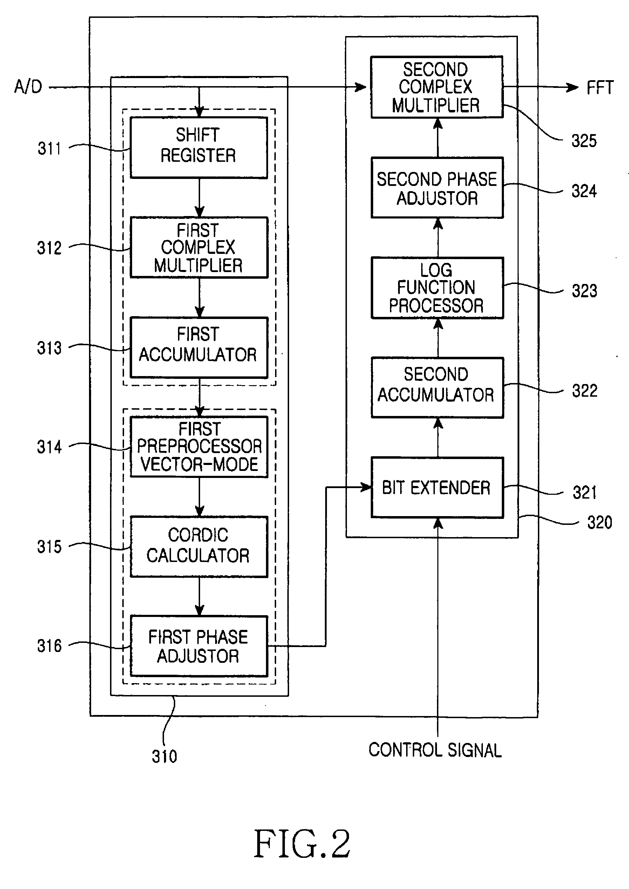

FIG. 2 is a block diagram of the frequency synchronizer 300 according to the present invention.

In FIG. 2, the frequency synchronizer 300 includes an estimation unit 3 10 for estimating a frequency offset or a residual phase of a received signal using a digital signal output from the A/D converter 200 and a compensation unit 320 for compensating for the estimated frequency offset according to a control signal.

The estimation unit 310 includes a shift register 311 for delaying a sample of a received signal and simultaneously outputting conjugate complex numbers of a predetermined received signal and a next received signal, a first complex multiplier 312 for performing complex multiplying with respect to a signal output from the shift register 311, a first accumulator 313 for accumulating an output of the first complex multiplier 312 according to a mode signal output from the controller 10, a first preprocessor 314 for performing preprocessing for phase rotation transform with respect to a value accumulated by the first accumulator 313, a vector-mode CORDIC calculator 315 for estimating an arctangent value using a signal processed by the first preprocessor 314, and a first phase adjustor 316 for adjusting a phase using the arctangent value estimated by the vector-mode CORDIC calculator 315.

The compensation unit 320 includes a bit extender 321 for dividing the frequency offset output from the first phase adjustor 316 of the estimation unit 3 10 into samples of a predetermined size according to the control signal of the controller 10, a second accumulator 322 for accumulating a frequency offset of each of the samples obtained by the bit extender 321 to generate a log function table address, a log function processor 323 for outputting a trigonometric function value by referring to the log function table address generated by the second accumulator 322, a second phase adjustor 324 for generating a complex number to be compensated for using outputs of the log function processor 323 and the second accumulator 322, and a second complex multiplier 325 for compensating for a signal output from the A/D converter 200 using the complex number output from the second phase adjustor 324.

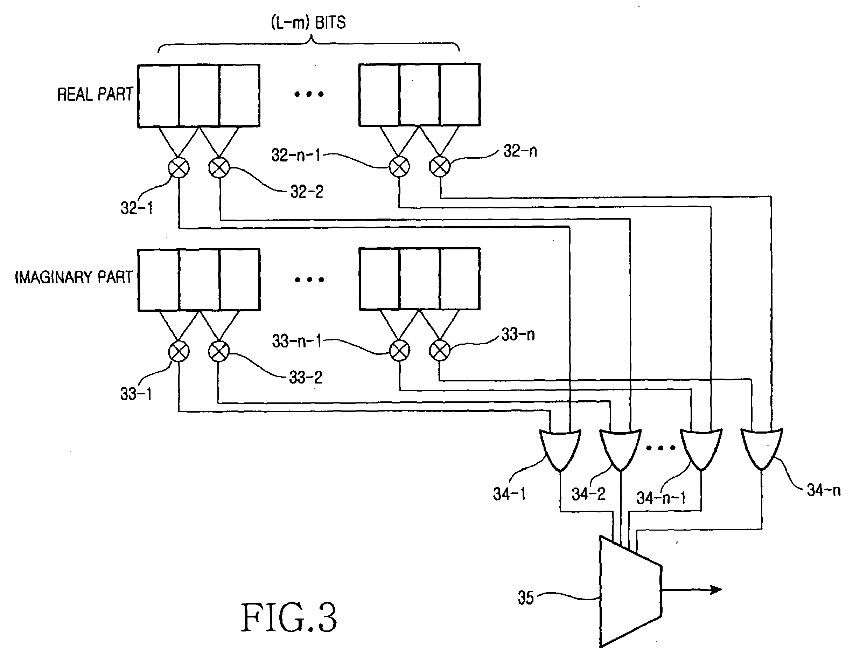

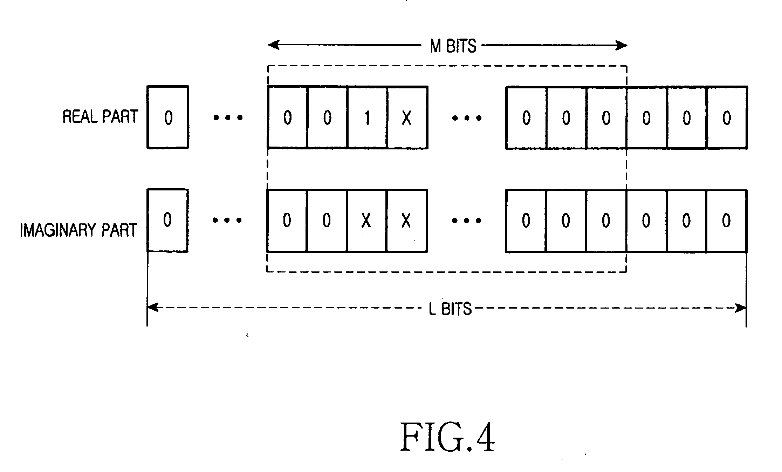

FIG. 3 illustrates the internal structure of the first preprocessor 314 and FIG. 4 is a conceptual view for explaining an operation of the first preprocessor 314. It is assumed herein that an output of the first accumulator 313 is composed of L bits and m bits are calculated in the vector-mode CORDIC calculator 315.

As illustrated in FIG. 3 and 4, the first preprocessor 314 includes Exclusive OR (XOR) gates 32-1 through 32-n and 33-1 through 33-n for performing an XOR function on an output of the first accumulator 313, OR gates 34-1 through 34-n for performing an OR function on outputs of the XOR gates 32-1 through 32-n and 33-1 through 33-n, and a multiplexer 35 for multiplexing outputs of the OR gates 34-1 through 34-n. The first preprocessor 314 uses a feature that x and y values stored in a real-part memory and an imaginary-part memory (not shown) are not absolute but are relative values in CORDIC calculation. Thus, the first preprocessor 314 detects the position of a Most Significant Bit (MSB) indicating 1 in the real part and imaginary part of an output of the first accumulator 313 and selects m bits including "0" or "1" of 2 bits from the detected value to prevent calculation overflow. To implement the first preprocessor 314, (L-m-1)*2 XOR gates and (L-m-1) OR gates are required and the multiplexer 35 having a size of (L-m-1)* 1 is required.

The first preprocessor 314 according to the present invention functions in the same manner as a conventional normalization block that performs a division operation, but performs more accurate normalization by referring to the bit value of an input signal and the position of the bit value.

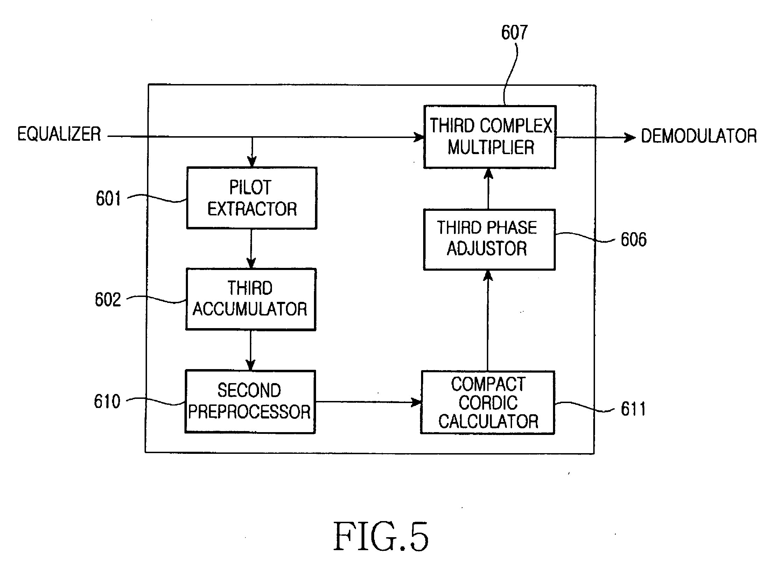

FIG. 5 is a block diagram illustrating the internal structure of the residual phase detector 600.

As illustrated in FIG. 5, the residual phase detector 600 includes a pilot extractor 601 for extracting a pilot signal from a signal output from the equalizer 500, a third accumulator 602 for accumulating the pilot signal extracted by the pilot extractor 601, a second preprocessor 610 for performing preprocessing for CORDIC calculation with respect to a signal output from the third accumulator 602, a compact CORDIC calculator 611 for estimating an arctangent value using a signal processed by the second preprocessor 610, a third phase adjustor 606 for adjusting a phase using the arctangent value estimated by the compact CORDIC calculator 611, and a third complex multiplier 607 for correcting a phase of a signal estimated by the equalizer 500 by reflecting an output of the third phase adjustor 606.

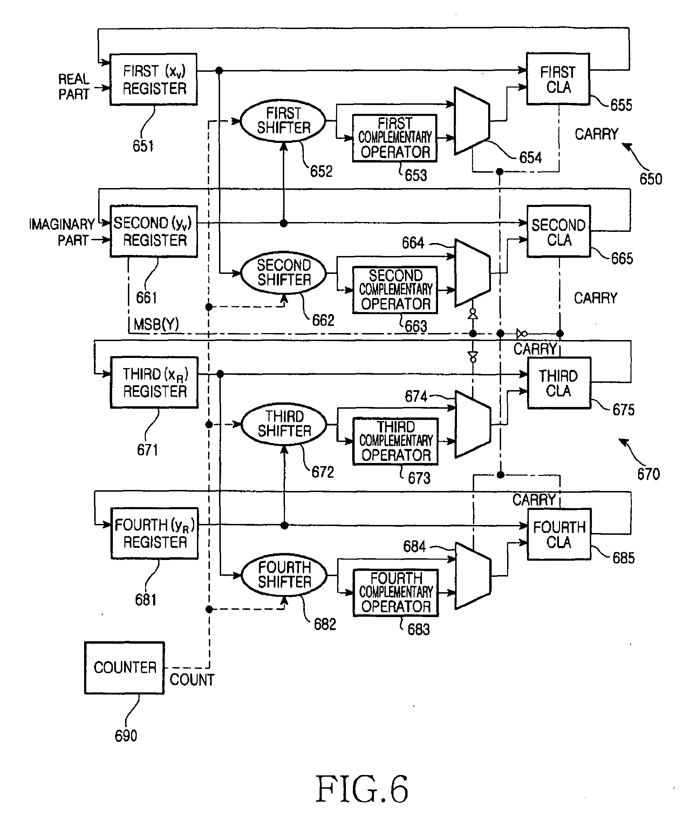

FIG. 6 is a block diagram illustrating the internal structure of the compact CORDIC calculator 611, and is useful in explaining its operation. The compact CORDIC calculator 611 simultaneously performs vector-mode CORDIC calculations and rotation-mode CORDIC calculations and can process vector-mode CORDIC calculations and rotation-mode CORDIC calculations by a single repeated process.

As illustrated in FIG. 6, the compact CORDIC calculator 611 according to the present invention includes a vector-mode unit 650 for performing a vector-mode operation, a rotation-mode unit 670 for performing a rotation-mode operation, and a counter 690 for counting the number of repetitions.

The vector-mode unit 650 includes a first register 651 for receiving and temporarily storing a real part x of the signal output from the second preprocessor 610, a second register 661 for receiving and temporarily storing an imaginary part y of the signal output from the second preprocessor 610, a first shifter 652 for shifting an output of the second register 661 according to the number of repetitions output from the counter 690, a first complementary operator 653 for performing a complementary operation with respect to 1 for the output of the first shifter 652, a first multiplexer 654 for multiplexing an output of the first complementary operator 653 and an output of the first shifter 652, a first Carry Lookahead Adder (CLA) 655 for adding an output of the first multiplexer 654 to the output of the first register 651 and feeding back the result to the first register 651, a second shifter 662 for shifting the output of the first register 651 according to the number of repetitions output from the counter 690, a second complementary operator 663 for performing a complementary operation with respect to 1 for the output of the second shifter 662, a second multiplexer 664 for multiplexing an output of the second complementary operator 663 and the output of the second shifter 662, and a second CLA 665 for adding an output of the second multiplexer 664 to the output of the second register 661 and feeding back the result to the second register 661. The first multiplexer 654 and the second multiplexer 664 and the first CLA 655 and the second CLA 665 perform multiplexing and carry operations by referring to the MSB of a signal stored in the second register 661.

The rotation-mode unit 670 includes a third register 671 and a fourth register 681 whose initial values are set to 1/K and 0, a third shifter 672 for shifting an output of the fourth register 681 according to the number of repetitions output from the counter 690, a third complementary operator 673 for performing a complementary operation with respect to 1 for an output of the third shifter 672, a third multiplexer 674 for multiplexing an output of the third complementary operator 673 and the output of the third shifter 672, a third CLA 675 for adding an output of the third multiplexer 674 to the output of the third register 671 and feeding back the result to the third register 671, a fourth shifter 682 for shifting the output of the third register 671 according to the number of repetitions output from the counter 690, a fourth complementary operator 683 for performing a complementary operation with respect to 1 for the output of the fourth shifter 682, a fourth multiplexer 684 for multiplexing an output of the fourth complementary operator 683 and the output of the fourth shifter 682, and a fourth CLA 685 for adding an output of the fourth multiplexer 684 to the output of the fourth register 681 and feeding back the result to the fourth register 681. The third multiplexer 674 and the fourth multiplexer 684 and the third CLA 675 and the fourth CLA 685 perform multiplexing and carry operations by referring to the MSB of the signal stored in the second register 661.

Hereinafter, an operation of the frequency synchronizer 300 of FIG 1 will be described in detail with reference to the accompanying drawings.

First, a short training symbol transmitted through the OFDM receiver of FIG. 1 can be expressed in Equation (1) as follows:

$$s(n) = \sum_{k=0}^{N-1} S(k) \exp\left\{ \frac{j2\pi nk}{N} \right\}, \qquad n = 0,1,2,\cdots, N-1 \quad \cdots\cdots\cdots (1),$$

where $S(k)$ indicates a short training symbol of a frequency domain, N indicates an FFT/IFFT size, and $s(n)$ indicates a short training symbol in a time domain and is composed of N/D repeated sequences, each of which is D samples long, during a single symbol interval. j indicates a symbol put before an imaginary number generally. Also k indicates a constant used for numbering as shown in the bottom of sigma. Definitions of these terms are well-known to those of skilled in the art.

Since a short training symbol received through a channel has a frequency offset due to phase jitter or Doppler shift, the received short training symbol can be expressed in Equation (2) as follows:

$$r(n) = \sum_{k=0}^{N-1} S(k) H(k) \exp\left\{ \frac{j2\pi(k+\varepsilon)n}{N} \right\} \exp\left\{ \frac{j2\pi(n_0 + \Delta t)}{N} \right\} + W(n) \quad \cdots\cdots (2),$$

where $\varepsilon(= f_{offset}/\Delta f)$ indicates a normalized frequency offset, $f_{offset}$ and $\Delta f$ indicate a normalized frequency offset interval and a subchannel interval, and $H(k)$ indicates a frequency response of a channel. $\Delta t$ indicates the start point (n=0) of signal reception, $2\pi\Delta t/N$ indicates initial phase rotation, $n_0$ indicates the start point of a coarse mode, and $W(n)$ indicates additive noise.

As can be seen from Equation (2), since the received signal is composed of N/D repeated sequences, each of which is D samples long, an integer frequency offset and a decimal frequency offset can be estimated using an autocorrelation property of Equation (3) when the influence of noise is excluded.

$$\hat{\varepsilon} = \frac{N}{2\pi D}\arg\left(\sum_{n=0}^{L-1} r(n+D)r(n)^*\right)$$

$$= \frac{N}{2\pi D}\arg\left(\frac{\sum_{n=0}^{L-1}\mathrm{Im}\left(r(n+D)r(n)^*\right)}{\sum_{n=0}^{L-1}\mathrm{Re}\left(r(n+D)r(n)^*\right)}\right) \quad\cdots\cdots\cdots\cdots\cdots\cdots\cdots\cdots\cdots\cdots (3),$$

where D indicates an interval of repeated two symbols. As can be seen from Equation (3), after delaying a sample using a repeated training symbol, a frequency offset is estimated using the autocorrelation property. The estimation range of the integer frequency offset is -2 - 2 when D=16 and the estimation range of the decimal frequency offset is -0.5 - 0.5 when D=64.

When the arctangent function is implemented using a CORDIC calculation, a simpler and more accurate normalization can be achieved by using a compact preprocessor according to the present invention than using a conventional normalization block that performs a division operation.

As illustrated in FIG. 3, the first preprocessor 314 compares bit values of a real part and an imaginary part of an output of the first accumulator 313 for normalization. When the output of the first accumulator 313 is composed of L bits and m bits are calculated in the vector-mode CORDIC calculator 315, the first preprocessor 314 requires (L-m-1) *2 XOR gates, (L-m-1) OR gates, and a multiplexer having a size of (L-m-1)*1. Using CORDIC calculation, values calculated in x and y registers and of the vector-mode CORDIC calculator 315 are not absolute values, but are relative values-reference numerals are deleted. Thus, when selecting an effective bit for CORDIC calculation, the first preprocessor 314 selects the position of the MSB indicating 1 in a real part and an imaginary part of an output of the first accumulator 313 irrespective of the number system of the output of the first accumulator 313, selects m bits including "0" of 2 bits to prevent calculation overflow, and performs normalization.

In conventional normalization using a division operation, the sizes of a real part and an imaginary part cannot be previously known. As a result, the quotient of the division operation should include an integer part of several bits for a case where the imaginary part is greater than the real part. However, when the imaginary part is less than the real part, bits for expressing the integer part are not required, resulting in waste of bits and thus degradation in estimation accuracy due to a small amount of information.

A signal output from the third accumulator 602 of the residual phase detector 600 can be expressed in Equation (4) as follows:

$$\hat{\phi}_n = \tan^{-1}\sum_{p=0}^{P-1} R_n(k)P_n^*(k)$$

$$= \tan^{-1}\left\{\frac{\sum_{p=0}^{P-1}\mathrm{Im}\left(R_n(k)P_n^*(k)\right)}{\sum_{p=0}^{P-1}\mathrm{Re}\left(R_n(k)P_n^*(k)\right)}\right\} \quad\cdots\cdots\cdots\cdots\cdots\cdots\cdots\cdots\cdots (4),$$

where $R_n(k)$ indicates a $k^{th}$ subcarrier of an $n^{th}$ received symbol, $P_n(k)$ indicates a $k^{th}$ pilot subcarrier of an $n^{th}$ symbol, $\hat{\phi}_n$ indicates an estimated phase of the $n^{th}$ symbol, and $P$ indicates the number of pilot carriers.

In conventional CORDIC-based frequency offset synchronization, the arctangent operation is performed using a vector-mode CORDIC calculation and a trigonometric operation is performed with respect to a value estimated by the arctangent operation using a rotation-mode CORDIC calculation.

The compact CORDIC calculator 611 according to the present invention can process vector-mode CORDIC calculations and rotation-mode CORDIC calculations by a single repeated process. A phase estimated in conventional vector-mode CORDIC calculations can be expressed in Equation (5) as follows:

$$z_V(m+1) = -d_v(m)\alpha^{(m)} - d_v(m-1)\alpha^{(m-1)} - \cdots - d_v(0)\alpha^{(0)} \cdots \cdots (5),$$

where $z_V(m+1)$ indicates a phase estimated after m repetitions in a vector mode, $\alpha^{(m)}$ indicates an $m^{th}$ phase stored in a memory, and $d_V(m)$ indicates a sign selected by referring to the sign of a value of a y memory in an $m^{th}$ repetition. Rotation-mode CORDIC calculation is performed using the estimated phase and a sign $d_R(m)$ of a rotation mode is selected in rotation-mode CORDIC calculation such that a phase converges to 0. The sign of the rotation mode after m repetitions can be expressed in Equation (6) as follows:

$$\begin{aligned} z_R(m+1) &= z_V(m+1) - \left\{ -d_R(m)\alpha^{(m)} - d_R(m-1)\alpha^{(m-1)} - \cdots - d_R(0)\alpha^{(0)} \right\} \\ &= \left\{ -d_v(m)\alpha^{(m)} - d_v(m-1)\alpha^{(m-1)} - \cdots - d_v(0)\alpha^{(0)} \right\} \qquad \cdots \cdots (6), \\ &\quad - \left\{ -d_R(m)\alpha^{(m)} - d_R(m-1)\alpha^{(m-1)} - \cdots - d_R(0)\alpha^{(0)} \right\} \end{aligned}$$

$d_R(m)$ is selected in a rotation-mode CORDIC calculation such that $Z_R(m+1)$ converges to 0, and it can be seen from Equation (6) that $d_R(m)$ is opposite to $d_V(m)$.

The present invention is configured such that vector-mode CORDIC calculations and rotation-mode CORDIC calculations are simultaneously performed by a single repetition using the characteristics described above. Because of aiming at compensation value estimation, the compact CORDIC calculator 611 according to the present invention does not require a memory for storing $\alpha^{(m)}$ used for phase tracking.

A compact CORDIC algorithm according to the present invention can be expressed in Equation (7) as follows:

$$\begin{aligned} x_V(i+1) &= x_V(i) - d_i y_V(i) 2^{-i} \\ y_V(i+1) &= y_V(i) + d_i x_V(i) 2^{-i} \\ x_R(i+1) &= x_R(i) + d_i y_R(i) 2^{-i} \qquad \cdots \cdots \cdots \cdots (7) \\ y_R(i+1) &= y_R(i) - d_i x_R(i) 2^{-i} \\ \text{where } d_i &= 1 \text{ if } y_V(i) < 0, \ \text{else } d_i = -1 \end{aligned}$$

Thus, initial values $x_V(0)$ and $y_V(0)$ of the first register 651 and the second register 661 of the vector-mode unit 650 use a real part and an imaginary part output from the second preprocessor 610, and initial values $x_R(0)$ and $y_R(0)$ of the third register 671 and the fourth register 681 of the rotation-mode unit 670 use 1/K and 0. After repeating Equation (7) m times, $x_R(m+1)$ and $y_R(m+1)$ remain in the third register 671 and the fourth register 681 and a residual phase is compensated for using $x_R(m+1)$ and $y_R(m+1)$.

As described above, according to the present invention, by introducing a preprocessor for performing normalization by referring to the optimal bit of an input signal and the position of the optimal bit, instead of performing conventional normalization using a division operation, the accuracy of CORDIC-based frequency offset estimation can be improved and calculation complexity can be reduced.

Furthermore, a memory for storing a phase for each mode is not required, thereby reducing manufacturing cost. Moreover, a vector-mode process and a rotation-mode process are performed simultaneously, thereby minimizing operation processing delay.

While the present invention has been shown and described with reference to a preferred embodiment thereof, it will be understood by those skilled in the art that various changes in form and details may be made therein without departing from the spirit and scope of the invention.

**Claims**

1. A synchronization apparatus for a receiver that performs synchronization in a digital domain and detects a transmission signal, the synchronization apparatus comprising:

   an Analog-to-Digital (A/D) converter for converting a received signal into a digital signal;
   a frequency synchronizer for synchronizing a frequency using the digital signal output from the A/D converter;
   a signal detection unit for detecting a transmission symbol from a signal synchronized by the frequency synchronizer; and
   a residual phase detector for compensating for a residual phase of the transmission symbol output from the signal detection unit and outputting the resulting transmission symbol.

2. The synchronization apparatus of claim 1, wherein the frequency synchronizer comprises:

   an estimation unit for estimating a frequency offset of the received signal; and
   a compensation unit for compensating for the frequency offset estimated by the estimation unit.

3. The synchronization apparatus of claim 2, wherein the estimation unit comprises:

   a shift register for delaying a sample of the received signal and simultaneously outputting conjugate complex numbers of a predetermined received signal and a next received signal;
   a first complex multiplier for performing complex multiplying with respect to the output conjugate complex numbers;
   a first accumulator for accumulating an output of the first complex multiplier;
   a first preprocessor for performing preprocessing for phase rotation transform with respect to an output of the first accumulator;
   a vector-mode Coordinated Rotation Digital Computer (CORDIC) calculator for outputting a phase value by vector-mode CORDIC calculation with respect to an output of the first preprocessor; and
   a first phase adjustor for estimating the frequency offset from the phase value output from the vector-mode CORDIC calculator.

4. The synchronization apparatus of claim 2, wherein the compensation unit comprises:

   a bit extender for dividing the frequency offset output from the estimation unit into samples of a predetermined size;
   a second accumulator for accumulating a frequency offset of each of the samples output from the bit extender to generate a log function table address;
   a log function processor for outputting a trigonometric function value by referring to the log function table address generated by the second accumulator;
   a second phase adjustor for generating a complex number using the trigonometric function value output from the log function processor and an output of the second accumulator; and a second complex multiplier for compensating for the signal offset by multiplying the digital signal output from the A/D converter by the complex number output from the second phase adjustor.

5. The synchronization apparatus of claim 3, wherein the first preprocessor comprises:

   Exclusive OR (XOR) gates for performing XOR operations on an output of the first accumulator;
   OR gates for performing OR operations on outputs of the XOR gates; and
   a multiplexer for multiplexing outputs of the OR gates and outputting the result of multiplexing to the vector-mode CORDIC calculator.

6. The synchronization apparatus of claim 5, wherein the number of XOR gates is (L-m-1)*2, L indicating the number of bits output from the first accumulator and m indicating the number of bits required for CORDIC calculation.

7. The synchronization apparatus of claim 5, wherein the number of OR gates is (L-m-1), L indicating the number of bits output from the first accumulator and m indicating the number of bits required for CORDIC calculation.

8. The synchronization apparatus of claim 5, wherein the size of the multiplexer is (L-m-1)* 1, L indicating the number of bits output from the first accumulator and m indicating the number of bits required for CORDIC calculation.

9. The synchronization apparatus of claim 1, wherein the residual phase detector comprises:

a pilot extractor for extracting a pilot signal from a baseband signal output from the signal detection unit;
a third accumulator for accumulating the extracted pilot signal;
a second preprocessor for performing preprocessing for CORDIC calculation with respect to a signal output from the third accumulator;
a compact CORDIC calculator for simultaneously performing vector-mode CORDIC calculation and rotation-mode CORDIC calculation with respect to a signal output from the second preprocessor and outputting the phase value;
a third phase adjustor for estimating the frequency offset from the phase value output from the compact CORDIC calculator; and
a third complex multiplier for compensating for the residual phase by multiplying the baseband signal output from the signal detection unit by the complex value output from the third phase adjustor.

10. The synchronization apparatus of claim 9, wherein the compact CORDIC calculator comprises:

a vector-mode unit for performing vector-mode CORDIC calculation with respect to the signal output from the second preprocessor;
a rotation-mode unit for performing rotation-mode CORDIC calculation using a predetermined initial value; and
a counter for counting the number of repetitions of CORDIC calculation.

11. The synchronization apparatus of claim 10, wherein the vector-mode unit comprises:

a first register for receiving and temporarily storing a real part of the signal output from the second preprocessor;
a second register for receiving and temporarily storing an imaginary part of the signal output from the second preprocessor;
a first shifter for shifting an output of the second register according to the number of repetitions output from the counter;
a first complementary operator for performing a complementary operation with respect to 1 for the output of the first shifter;
a first multiplexer for multiplexing an output of the first complementary operator and an output of the first shifter;
a first Carry Lookahead Adder (CLA) for adding an output of the first multiplexer to the output of the first register and feeding back the result to the first register;
a second shifter for shifting the output of the first register according to the number of repetitions output from the counter;
a second complementary operator for performing a complementary operation with respect to 1 for the output of the second shifter;
a second multiplexer for multiplexing an output of the second complementary operator and the output of the second shifter; and
a second CLA for adding an output of the second multiplexer to the output of the second register and feeding back the result to the second register.

12. The synchronization apparatus of claim 11, wherein the first multiplexer and the second multiplexer perform multiplexing by referring to the Most Significant Bit (MSB) of a signal stored in the second register.

13. The synchronization apparatus of claim 11, wherein the first CLA and the second CLA perform carry operations by referring to the Most Significant Bit (MSB) of a signal stored in the second register.

**14.** The synchronization apparatus of claim 10, wherein the rotation-mode unit comprises:

a third register for receiving and temporarily storing a real part of a signal output from a fourth preprocessor;

a fourth register for receiving and temporarily storing an imaginary part of the signal output from the fourth preprocessor;

a third shifter for shifting an output of the fourth register according to the number of repetitions output from the counter;

a third complementary operator for performing a complementary operation with respect to 1 for an output of the third shifter;

a third multiplexer for multiplexing an output of the third complementary operator and the output of the third shifter;

a third CLA for adding an output of the third multiplexer to the output of the third register and feeding back the result to the third register;

a fourth shifter for shifting the output of the third register according to the number of repetitions output from the counter;

a fourth complementary operator for performing a complementary operation with respect to 1 for the output of the fourth shifter;

a fourth multiplexer for multiplexing an output of the fourth complementary operator and the output of the fourth shifter; and

a fourth CLA for adding an output of the fourth multiplexer to the output of the fourth register and feeding back the result to the fourth register.

**15.** The synchronization apparatus of claim 14, wherein initial values of the third register and the fourth register are set to 1/K and 0, respectively.

**16.** The synchronization apparatus of claim 14, wherein the third multiplexer and the fourth multiplexer perform multiplexing by referring to the Most Significant Bit (MSB) of a signal stored in the second register.

**17.** The synchronization apparatus of claim 11, wherein the third CLA and the fourth CLA perform carry operations by referring to the Most Significant Bit (MSB) of a signal stored in the second register.

**18.** The synchronization apparatus of claim 1, wherein the signal detection unit comprises:

a Fourier transformer for performing Fast Fourier Transform (FFT) with respect to a signal output from the frequency synchronizer;

an equalizer for equalizing a signal output from the Fourier transformer; and

a channel estimator for estimating a channel value from a signal output from the equalizer and inputting the estimated channel to the Fourier transformer.

**19.** The synchronization apparatus of claim 18, wherein the frequency synchronizer comprises:

an estimation unit for estimating a frequency offset of the received signal; and

a compensation unit for compensating for the frequency offset estimated by the estimation unit.

**20.** The synchronization apparatus of claim 19, wherein the estimation unit comprises:

a shift register for delaying a sample of the received signal and simultaneously outputting conjugate complex numbers of a predetermined received signal and a next received signal;

a first complex multiplier for performing complex multiplying with respect to the output conjugate complex numbers;

a first accumulator for accumulating an output of the first complex multiplier;

a first preprocessor for performing preprocessing for phase rotation transform with respect to an output of the first accumulator;

a vector-mode Coordinated Rotation Digital Computer (CORDIC) calculator for outputting a phase value by vector-mode CORDIC calculation with respect to an output of the first preprocessor; and

a first phase adjustor for estimating the frequency offset from the phase value output from the vector-mode CORDIC calculator.

**21.** The synchronization apparatus of claim 19, wherein the compensation unit comprises:

a bit extender for dividing the frequency offset output from the estimation unit into samples of a predetermined size;

a second accumulator for accumulating a frequency offset of each of the samples output from the bit extender to generate a log function table address;

a log function processor for outputting a trigonometric function value by referring to the log function table address generated by the second accumulator;

a second phase adjustor for generating a complex number using the trigonometric function value output from the log function processor and an output of the second accumulator; a second complex multiplier for compensating for the signal offset by multiplying the digital signal output from the A/D converter by the complex number output from the second phase adjustor.

22. The synchronization apparatus of claim 20, wherein the first preprocessor comprises:

Exclusive OR (XOR) gates for performing XOR on an output of the first accumulator;

OR gates for performing OR on outputs of the XOR gates; and

a multiplexer for multiplexing outputs of the OR gates and outputting the result of multiplexing to the vector-mode CORDIC calculator.

23. The synchronization apparatus of claim 22, wherein the number of XOR gates is (L-m-1)*2, L indicating the number of bits output from the first accumulator and m indicating the number of bits required for CORDIC calculation.

24. The synchronization apparatus of claim 22, wherein the number of OR gates is (L-m-1), L indicating the number of bits output from the first accumulator and m indicating the number of bits required for CORDIC calculation.

25. The synchronization apparatus of claim 22, wherein the size of the multiplexer is (L-m-1)* 1, L indicating the number of bits output from the first accumulator and m indicating the number of bits required for CORDIC calculation.

26. A synchronization method for a receiver that performs synchronization in a digital domain and detects a transmission signal, the synchronization method comprising the steps of:

converting a received signal into a digital signal;

synchronizing a frequency using the digital signal;

detecting a transmission symbol from the synchronized signal; and

compensating for a residual phase of the output transmission symbol and outputting the resulting transmission symbol.

27. The synchronization method of claim 26, wherein the step of synchronizing the frequency comprises :

estimating a frequency offset of the received signal; and

compensating for the estimated frequency offset.

28. The synchronization method of claim 27, wherein the step of estimating the frequency offset comprises :

delaying a sample of the received signal and simultaneously outputting conjugate complex numbers of a predetermined received signal and a next received signal;

performing complex multiplying with respect to the output conjugate complex numbers;

accumulating the result of complex multiplying;

performing preprocessing for phase rotation transform with respect to the accumulated result of complex multiplying;

outputting a phase value by vector-mode CORDIC calculation with respect to the result of preprocessing; and

estimating the frequency offset from the output phase value.

29. The synchronization method of claim 27, wherein the step of compensating for the frequency offset comprises :

dividing the estimated frequency offset into samples of a predetermined size;

accumulating a frequency offset of each of the samples output to generate a log function table address;

outputting a trigonometric function value by referring to the generated log function table address;

generating a complex number using the output trigonometric function value and the generated log function table address; and
compensating for the signal offset by multiplying the output digital signal by the generated complex number.

30. The synchronization method of claim 28, wherein the step of preprocessing for phase rotation transform comprises :

    performing Exclusive OR (XOR) operations on the accumulated result of complex multiplying;
    performing OR operations on the result of XOR operations; and
    multiplexing the result of OR operations and outputting the result of preprocessing.

31. The synchronization method of claim 30, wherein the XOR operations are simultaneously performed by (L-m-1)*2 XOR gates, L indicating the number of bits of the accumulated result of complex multiplying and m indicating the number of bits required for CORDIC calculation.

32. The synchronization method of claim 30, wherein the OR operations are simultaneously performed by (L-m-1) OR gates, L indicating the number of bits of the accumulated result of complex multiplying and m indicating the number of bits required for CORDIC calculation.

33. The synchronization method of claim 30, wherein the multiplexing of the result of OR operations is performed by a multiplexer having a size of (L-m-1)*1, L indicating the number of bits of the accumulated result of complex multiplying and m indicating the number of bits required for CORDIC calculation.

34. The synchronization method of claim 26, wherein the step of compensating for the residual phase of the transmission symbol comprises :

    extracting a pilot signal from the transmission symbol;
    accumulating the extracted pilot signal;
    performing preprocessing for CORDIC calculation with respect to the accumulated pilot signal;
    simultaneously performing vector-mode CORDIC calculation and rotation-mode CORDIC calculation with respect to the preprocessed signal and outputting the phase value;
    estimating the frequency offset from the output phase value; and
    compensating for the residual phase by multiplying the transmission symbol by the complex number corresponding to the estimated frequency offset.

FIG.1

FIG.2

FIG.3

FIG.4

FIG.5

FIG.6